# EUROPEAN PATENT SPECIFICATION

(11) **EP 4 056 383 B1**
(45) Date of publication and mention of the grant of the patent: **30.10.2024**
(21) Application number: 22160848.2
(22) Date of filing: 08.03.2022
(51) Int. Cl.: B60B 7/04, B60B 7/06

(54) **ROAD VEHICLE ALLOY WHEEL TRIM COMPONENT**
LEICHTMETALLRADVERKLEIDUNGSKOMPONENTE FÜR EIN STRASSENFAHRZEUG
COMPOSANT D'ENJOLIVEUR DE ROUE EN ALLIAGE DE VÉHICULE ROUTIER

(30) Priority: 11.03.2021 GB 202103359
(43) Date of publication of application: 14.09.2022
(73) Proprietor: Nissan Motor Manufacturing (UK) Limited, Cranfield, Bedfordshire MK43 0DB (GB)
(72) Inventor: RUSSO, Ralf, Bedfordshire MK43 0DB (GB); TEARLE, Glenn, Bedfordshire MK43 0DB (GB)

(56) References cited:
- EP-A1- 1 473 470
- EP-A1- 1 818 183
- WO-A1-2010/105175
- DE-B3- 102018 108 149

## Description

### Technical Field of the Invention

The present invention relates to a road vehicle wheel trim system and also to a road vehicle wheel assembly fitted with such a trim system.

### Background to the Invention

It is known to provide automobile alloy wheels with a decorative, typically plastic, trim; particularly along or between the wheel spokes. These inserts may be coloured to match the automobile body paint, or to complement it.

Such trim may have a functional as well as a decorative purpose. In one arrangement, in an attempt to improve vehicle efficiency, it is proposed to use light alloy spoked wheels with relatively thin spokes in order to reduce wheel mass. This leads to a very open wheel structure which is not favourable for good aerodynamic performance. So, it is further proposed to fill the spaces between the spokes with a lightweight plastic trim, also known as an insert.

Such trim is conveniently clipped to the wheel so that no fastening means are visible, but existing fastening arrangements have proven unreliable; leading to loss of inserts. A more secure fastening arrangement is therefore required. It is known to employ fasteners which pass through an aperture in a wheel, but it can be difficult to obtain a secure fastening whilst accommodating tolerances in the thickness of the wheel.

Wheel trim components also need to be removable to enable them to be replaced in the event of damage, such as when a wheel is "kerbed"; while the wheel and trim assembly should remain aesthetically pleasing. Likewise, trim components may need to be transferred to a replacement wheel; so that they are compatible with those on the other wheels on a vehicle to which the replacement wheel is to be fitted.

Prior art patent application WO2010/105,175A1 discloses an alloy road wheel with a cladding secured to the wheel by mushroom head expansion clips secured to the wheel by cross head screws.

It is an object of embodiments of the present invention to provide an improved arrangement for fastening trim to a vehicle wheel which overcomes or at least mitigates problems associated with known arrangements.

### Summary of the Invention

According to an aspect of the present invention there is provided a road vehicle wheel trim system comprising the features of claim 1.

Since the male fitting can be retained within the female fitting over a range of relative positions, the system can securely fasten the trim component to a wheel whilst accommodating a range of wheel thicknesses. This leads to more securely fastened trim components.

The system also facilitates an arrangement where the fitting on a trim component is provided on its rear face and is introduced into a through-hole on the front face of a wheel, and the retainer is introduced into the same through hole from the rear of the wheel. This enables a discreet installation to be achieved where neither fitting nor retainer is visible in normal use of the wheel.

Of course, since the invention allows trim components to be more securely fastened, and more discreetly installed, manufacturers are more likely to install them. In consequence, the environmental benefits of including trim components that improve efficiency are more likely to be achieved.

The removability of the head from the retainer enables a trim component to be removed from a wheel, for example so that a damaged component can be replaced. The head may be arranged to be broken off from the retainer. The retainer may comprise a frangible portion to facilitate this. The head may comprise one or more slots or formations intended to receive a tool, such as a screwdriver, to facilitate removal of the head. The head may take the form of a flange, and a slot may be formed in an outside edge of the flange.

The retainer may define a generally cylindrical cavity.

The retainer may comprise two or more separate components which, together, may define the female fitting. This can facilitate moulding of the retainer.

The retainer comprises two or more hingedly connected components which, together, define the female fitting. This facilitates production, enabling the retainer to be moulded in one piece in an as moulded configuration; and later put into an in use configuration (in which it would be more difficult or impossible to mould the retainer).

The retainer may be moulded in a single piece. The retainer may be moulded from a plastic material.

Both the male fitting and the female fitting comprise multiple rows of teeth arranged to engage with each other when the male fitting is received into the female fitting. The more teeth that are engaged, the more securely the two fittings are fastened together. The teeth of the male and/or female fitting may interlock with the other fitting, enabling insertion of the male fitting into the female fitting; but preventing its removal without destroying the female fitting.

Conveniently, the male and/or female fittings are fir tree fittings.

The fitting of the trim component may be formed integrally, for example moulded with, the trim component. Or it could be formed separately and fastened to the trim component. The trim component may comprise an arm. The male fitting comprised in the component may be disposed on the arm.

There may be multiple trim components as dictated by the design of a wheel.

The or each trim component may comprise multiple fittings. A respective retainer may be provided for each fitting. Increasing the number of fasteners or retainers and fittings per trim component increases the security with which the trim component may be fastened to a wheel.

According to a second aspect of the present invention there is provided a road vehicle wheel assembly comprising:
a wheel comprising a plurality of spokes and a plurality of through-holes; and
a road vehicle wheel trim system according to the first aspect of the invention, wherein the male fitting of the trim component is received into the female fitting of the retainer in the through-hole, thereby to fasten the trim component to the wheel.

The wheel may comprise for example 3, 4, 5, 6, 7 or more spokes. A plurality of trim components may be provided. Where the wheel is spoked, a respective trim component may be provided to fill some or all of the spaces between the spokes. Alternatively, or in addition, a respective trim component may be provided to fit over some or all of the spokes.

In a spoked wheel, respective through-holes may be located at or adjacent a radially inner and/or a radially outer end of each spoke. Single respective through-holes may be located between each adjacent pair of spokes in or adjacent a radially inner position. Two further through-holes may be located between each adjacent pair of spokes at a radially outer position, one adjacent each spoke. A respective through-hole may be located in each spoke towards a radially outer end of the spoke. Alternatively, or in addition, a respective through-hole may be located in each spoke towards the radially inner end of the spoke or in a hub of the wheel adjacent the radially inner end of each spoke.

The wheel may comprise one or more recesses. In this case, a through-hole may be formed in the or each recess; and a trim component may be configured to fit into each recess. In a spoked wheel, recesses may formed in one or more of the spokes.

In a spoked wheel, a plurality of trim components may be arranged to fill spaces in or between the spokes.

The wheel may comprise one or more webs. One or more through-holes may be formed in the webs.

The wheel may have an outer (or front) face, which is visible when fitted to a vehicle and an inner (or rear) face which faces the wheel suspension when the wheel is fitted to a vehicle. The or each trim component is fitted to the front face of the wheel.

The or each trim component may have an outside (or front) face intended to be visible in use and an opposite, inside (or rear) face which faces the wheel suspension when the trim component is fitted to the wheel and the wheel is fitted to a vehicle. The or each fitting of the trim component is disposed on the rear face of the trim component. The or each fitting of the trim component will be hidden when the trim component is visible from the outside face. The trim component may take the form of a sheet of material. The or each fitting may be formed on the inside face of the sheet of material. The structure may comprise an arm. The sheet may be flat or curved (depending on the design of the wheel to which it is to be fitted).

The present invention also provides a road vehicle such as an automobile or van fitted with one or more wheel assemblies according to the invention. The road vehicle may be an electric vehicle.

### Detailed Description of the Invention

In order that the invention may be more clearly understood, embodiments thereof will now be described, by way of example only, with reference to the accompanying drawings, of which:
- Figure 1: is a view of the outside face of a road vehicle road wheel fitted with a single trim component;
- Figure 2: is a view of the inside face of the wheel of figure 1;
- Figure 3: is a rear view of the trim component of figure 1;
- Figure 4: is a partial side view of the trim component of figure 1 showing a single fitting on the component;
- Figure 5: is a view of the outside face of another wheel;
- Figure 6: is an enlarged view of part of the wheel of figure 5 with a trim component removed;
- Figure 7: is a rear perspective view of a trim component;
- Figure 8: is a perspective view of a retainer for use with the wheels of figures 1 and 5 in an as moulded configuration;
- Figure 9: is an axial cross-section view of the retainer of figure 8 in an in use configuration; and
- Figure 10: is a representative partial cross-sectional view taken along the line V-V of figure 1 and the line VV-VV of figure 5.

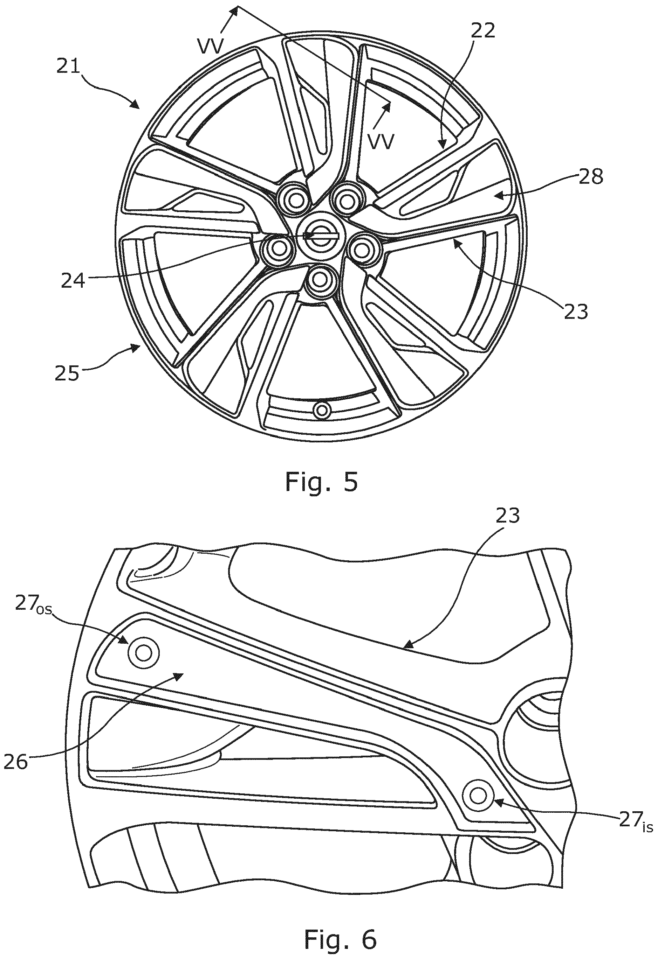

(It should be noted that the outside face of the wheel depicted in Figure 5 has the same styling as some wheels which are prior art to this patent; but the structures of the wheel and of the trim components according to the invention differ to the prior art.)

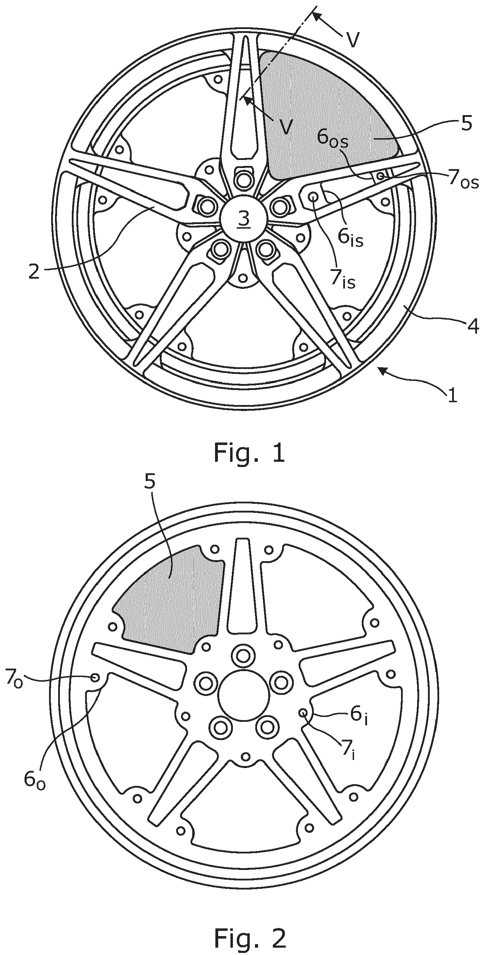

Referring to the drawings, figures 1 and 2 show a light alloy road wheel 1 for an automobile. In this example the wheel is cast from an aluminium alloy. The wheel could, however, be manufactured from other suitable materials such as a magnesium or other non-ferrous alloy, and using any suitable technique, e.g. forging or the like.

Figure 1 shows the outside face of the wheel, being the face that faces away from a vehicle to which it is fitted and which is visible in use. Figure 2 shows the opposite, inside/rear, face of the wheel.

The wheel has five forked spokes 2, each extending from a central hub 3 to a rim 4. In use, the rim will be fitted with a pneumatic tyre (not shown).

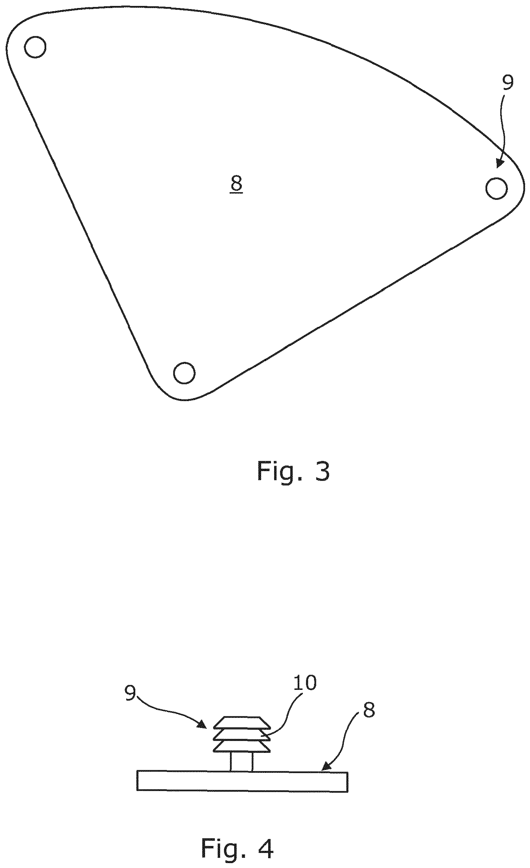

A single trim component 5, in the form of an insert, is shown fitted to the wheel 1. The trim component 5 comprises a sheet of plastics material 8 which substantially fills an opening in the wheel defined between two adjacent spokes 2 and the rim 4 of the wheel. The trim component 5 has an outer face, visible in figure 1, which presents a smooth, generally flat surface on the outside face of the wheel, and lies flush with, or slightly recessed behind, the outside face of the spokes 2 and the wheel rim 4. The trim component 5 also has an opposite inner (rear) face visible in figures 2 and 3.

Only one trim component 5 is shown fitted to the wheel 1. It will be appreciated, however, that in use five trim components would be fitted in order to close all the spaces between adjacent pairs of spokes 2. Suitably sized and shaped trim components could also be fitted into each spoke to close the spaces between the two prongs of each forked spoke 2. Care should be taken to allow passage of air through the wheels to allow brake cooling.

By closing openings in the wheel, fitting trim components 5 improves the aerodynamic performance of a vehicle fitted with the wheel.

At the points where each spoke 2 joins the wheel hub 3 and rim 4, a web 6is, 6os of material formed integrally with the wheel extends between the spoke and the hub (6is) or rim (6os) and presents a substantially planar face towards the outside of the wheel 1. A circular through-hole 7is, 7os extends through each web 6is, 6os generally at right angles to the outside face of the web 6is, 6os. These webs and holes are particularly suitable for mounting inserts between the two prongs of a spoke 2; but it can be seen from figures 1 and 2 that other webs and holes may be cast into the wheel for fitting of inserts 5 between spokes, for example webs 6i and 6o and holes 7i and 7o in figure 2.

The trim component 5 comprises a moulded sheet 8 of plastics material (such as ABS (Acrylonitrile Butadiene Styrene) with an outline shape generally of that of a sector of a circle, but with curved corners, so that it fills the space formed between adjacent spokes 2 and the rim 4 of the wheel 1 (figure 3). The outside face of the sheet 8 is smooth and generally flat.

On the inside face of the sheet 8 a respective male fitting 9 is disposed at each corner of the sheet 8. In this embodiment the male fitting comprises an elongate fir tree structure formed by an elongate shaft encircled by three circumferential teeth 10 spaced axially along the shaft towards a free end. Each tooth 10 presents a wedge-shaped profile towards the free end of the fitting, so that the diameter of the fitting decreases towards its free end along each tooth and then abruptly increases at the next tooth. The male fittings 9 are moulded from a resiliently flexible plastic material. The male fittings extend generally at right angles from the rear face of the sheet 8. The male fittings 9 are positioned to be received into through-holes 7i and 7o when the fitting 5 is mounted to the wheel 1.

Referring now to figures 5 to 7 there is shown another spoked, light alloy road wheel 21 for a vehicle. The wheel has five pairs of adjacent spokes 22, 23, each extending from a central hub 24 to a rim 25. In use the rim will be fitted with a pneumatic tyre (not shown).

One spoke 23 of each pair defines an elongate recess 26 in a front face of the spoke. The recess extends along the length of the spoke from the wheel rim 25 to the hub 24 and continues in the hub, curving towards the adjacent spoke 22 of the pair.

Two through-holes are formed in each recess 26 of the wheel, one 27os is formed toward the radially outer end of the spoke 23 in which the recess 26 is formed. The other 27is is formed towards the opposite, radially inner, end of the recess 26. Both through-holes are substantially circular in cross-section.

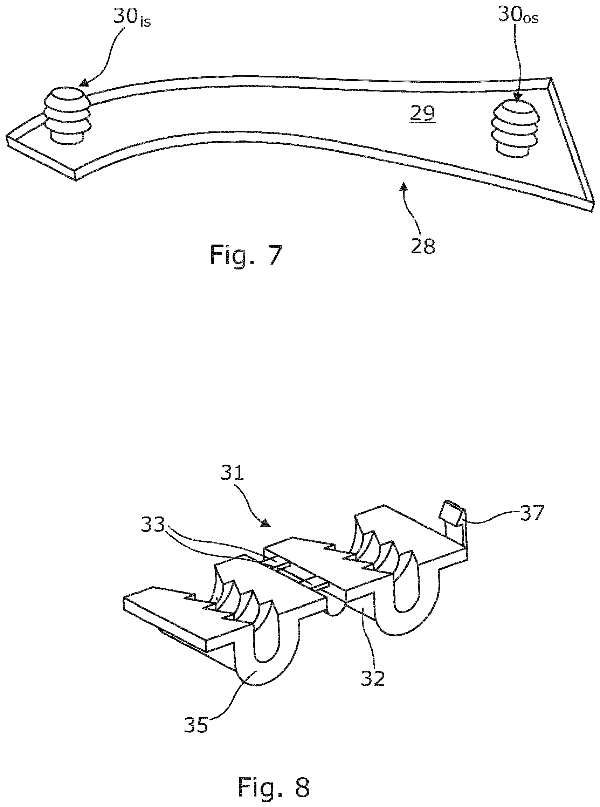

As shown in figure 5, a respective trim component 28, in the form of an insert, is fitted to each recess 26 of the wheel. The trim component 28 comprises a moulded sheet (29, Fig. 7) of plastics material with an outline shape that substantially fills the recess 26. The trim component has an outer face, visible in figure 5, with a smooth, generally flat, surface. The trim component 28 has an inner face, visible in figure 7, with a generally flat inner surface surrounded by a perimeter wall. The height of the wall defines the thickness of the sheet, and this is such that the outer surface is slightly recessed behind the face of the wheel surrounding the recess 26 when the trim component 28 is fitted to the recess.

On the inside face of the sheet 29 a respective male fitting 30is and 30os is disposed at each opposite end of the sheet 29. In this embodiment the male fittings comprise an elongate fir tree structure, of the same design as the fittings 9 shown in figures 3 and 4. One fitting 30is (the inner fitting) is positioned to be received into the radially inner through-hole 27is in the recess 26, and the other fitting 30os (the outer fitting) is positioned and shaped to be received into the corresponding radially outer through-hole 27os in the recess 26 when the fitting 28 is mounted to the wheel 21.

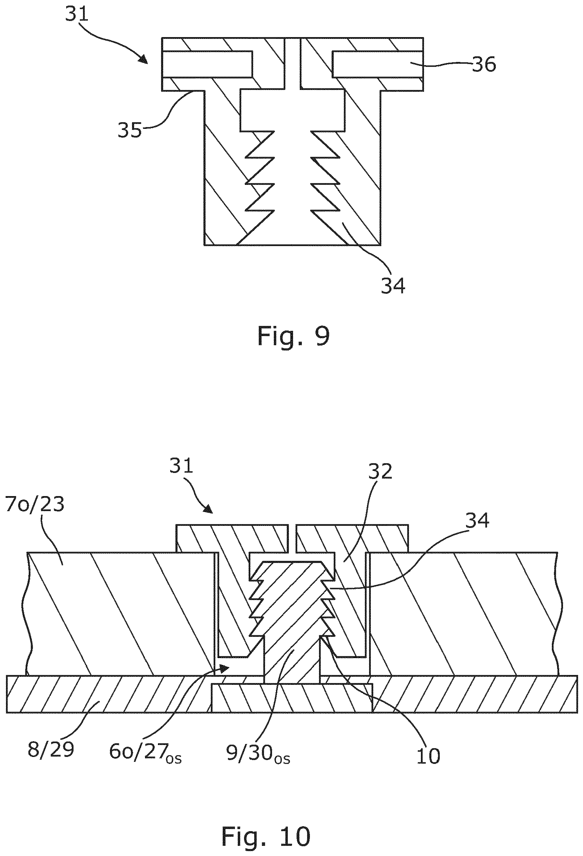

Referring to figures 8 and 9 there is shown a retainer 31 for use with both the trim components of figures 3 and 7 in an as moulded configuration. The retainer is arranged to define a female fitting for receiving and retaining the male fittings 9, 30is, 30os of the trim components. The retainer 31 is moulded in one piece from a resilient plastic material. The retainer comprises two adjacent substantially semi-cylindrical halves 32 joined by live hinges 33. Three axially spaced teeth (34, Fig. 10) are formed around the concave surface of each semi cylindrical half. The teeth are sized and spaced substantially identically to the teeth 10 of the male fitting 9, 30is, 30os. At one end of the retainer moulding a flange 35 is formed. A slot (36, Fig. 9) is formed in the outside circumferential edge of the flange of each semi-cylindrical half of the fitting. A resilient locking catch 37 is formed on a lateral edge of one of the semi-cylindrical halves.

In use the two semi-cylindrical halves of the retainer 31 are folded together to form a generally cylindrical fitting. At one end of the fitting there is a projecting flange 35 forming a head. At the other end there is an opening which opens into a generally cylindrical cavity with internally projecting circumferential, axially spaced teeth 34. In the in use configuration, the catch 37 on one half captures the other half to retain the moulding in this configuration.

The retainer 31 is sized so that in its in use configuration the cylindrical portion can be inserted into a cylindrical through-hole 7is, 7os, 7i, 7o, 27is, 27os in a wheel, but the head of the retainer cannot. The length of the retainer and dimensions of an aperture through a wheel are chosen so that when the cylindrical part is fully inserted into the through-hole, such that the head of the retainer abuts the wheel, the cylindrical part of the retainer is contained within the through-hole in the wheel. The retainer 31 is also sized such that in its in use configuration the internal diameter of the cylindrical portion (excluding the teeth) is the same or ever so slightly larger than the external diameter of the male fittings (including their teeth).

In use to affix a trim component 5, 28 to a wheel, retainers 31, in their operative configuration, are introduced into through-holes 7is, 7os, 7i, 7o, 27is, 27os in the rear face of a wheel 1, 21 and male fittings 9, 30is, 30os on the trim components 8, 28 are introduced into the through-holes from the front face of the wheel. The trim components 5, 28 and retainers 31 are urged together so that the male fittings on the trim components are received into the cylindrical cavities defined by the retainers. Owing to the relative sizes of the fittings and the retainers, this causes their respective teeth to ride over one another; locking the fittings to the retainers such that the wheel is clamped between the trim component and the retainers, securing the trim component to the wheel. As both the fittings and retainers have three axially spaced teeth, the fittings can be captured by the retainers at multiple different depths of insertion of one into the other, accommodating variations in thickness of the wheel in which a through-hole is formed.

To remove a trim component from a wheel a tool, such as a screwdriver, is inserted into the slots 36 in the flanges 35 on the retainer and used to snap the flanges off the retainer 31. The tool can also be used to break bridge pieces forming hinges 33, allowing the retainer 31 to become to a degree collapsible. This may allow the two parts of the retainer to be extracted from the inner face of the wheel; alternatively, the head may now be weakened sufficiently that the remainder of the retainer 31 can then be withdrawn, with the fitting to which it is fastened, out of the front face of the through-hole in the wheel. Once withdrawn, the two halves of the retainer can be unclipped and separated and the retainer 31 removed from the fitting 9, 30is, 30os. The parts of the retainer are discarded and a fresh retainer used to refit the fitting or a replacement fitting.

The embodiments are described above by way of example only. Many variations are possible without departing from the scope of protection afforded by the appended claims.

## Claims

1. A road vehicle wheel trim system comprising:
a trim component (5, 28) for fitment to a road vehicle wheel (1, 21);
and a retainer (31) for the trim component;
wherein the trim component (5, 28) comprises a male (9, 30) fitting and the retainer (31) is arranged, in use, to be at least partially disposed in a through-hole (7, 27) in the wheel to define a female fitting for engaging with the fitting of the trim component (5, 28);
and wherein the retainer (31) comprises a body (32) intended in use to be at least partially disposed in the through-hole (7, 27) in the wheel and to define a female fitting; and a head (35) which is sized to prevent it passing into the through-hole;
**characterized in that**:
the male (9, 30) fitting and the female fitting comprise multiple 11 rows of teeth spaced along their lengths for engaging with the other of the two fittings so that the male (9, 30) fitting can be, in use, retained within the female fitting over a range of relative positions of the two fittings; and wherein
at least part of the head (35) is arranged to be removable from the retainer (31) to enable the remainder of the retainer, in use, to pass through the through-hole (6, 7, 27); and **in that**:
the retainer is moulded in two halves joined by live hinges, which halves are folded together in use to form a generally cylindrical fitting which is inserted into said cylindrical through-hole in said wheel.

2. A system according to claim 1 wherein the head (35) comprises one or more slots (36) or formations intended to receive a tool to facilitate removal of at least part of the head.

3. A system according to any preceding claim wherein the retainer (31) comprises two or more separate components.

4. A system according to any preceding claim wherein the male (9, 30) and female fittings are fir tree fittings.

5. A system according to any preceding claim wherein there are multiple trim components (5, 28).

6. A system according to any preceding claim wherein the or each trim component (5, 28) comprises multiple fittings (9, 30) and a respective retainer (31) is provided for each fitting.

7. A road vehicle wheel assembly comprising:
a wheel (1, 21) comprising a plurality of spokes (2, 23) and a plurality of through-holes (7, 27);
and a road vehicle wheel trim system according to any preceding claim.

8. A road vehicle wheel assembly according to claim 7, wherein respective through-holes (7, 27) are located at or adjacent a radially inner and/or a radially outer end of each spoke (2, 23).

9. A road vehicle wheel assembly according to claim 7 or claim 8 wherein the wheel (21) comprises a recess (26), the through-hole (27) is formed in the recess and the trim component (28) is configured to fit into the recess.

10. A road vehicle wheel assembly according to claim 9, wherein the recess (26) is formed in one of the spokes (23).

11. A road vehicle wheel assembly according to claim 7, comprising a plurality of trim components (5, 28) arranged to fill spaces in (26) or between the spokes (2, 23).

12. A road vehicle wheel assembly according to claim 7 or claim 11 comprising one or more webs (6) and one or more of the through-holes (7) are formed in said webs.

13. A road vehicle wheel assembly according to any of claims 7 to 12 wherein the trim component (5, 28) has a front face intended to be visible in use and an opposite, rear face, and the fitting (9, 30) of the trim component is disposed in or on the rear face of the trim component.

## Patentansprüche

1. Radkappensystem für ein Straßenfahrzeug, umfassend:
ein Kappenbauteil (5, 28) für einen Einbau an einem Straßenfahrzeugrad (1, 21);
und eine Halterung (31) für das Kappenbauteil;
wobei das Kappenbauteil (5, 28) ein männliches (9, 30) Anschlussstück umfasst und die Halterung (31) in Verwendung angeordnet ist, um mindestens teilweise in einem Durchgangsloch (7, 27) in dem Rad eingerichtet zu werden, um ein weibliches Anschlussstück zum Eingreifen in das Anschlussstück des Kappenbauteils (5, 28) zu definieren;
und wobei die Halterung (31) einen Körper (32) umfasst, der in Verwendung bestimmt ist, um mindestens teilweise in dem Durchgangsloch (7, 27) in dem Rad eingerichtet zu werden und um ein weibliches Anschlussstück zu definieren; und einen Kopf (35), der ausgemessen ist, um zu verhindern, dass er in das Durchgangsloch eindringt; **dadurch gekennzeichnet, dass:**
das männliche (9, 30) Anschlussstück und das weibliche Anschlussstück mehrere Reihen von Zähnen umfassen, die entlang ihrer Längen zum Eingreifen in das andere der zwei Anschlüssstücke beabstandet sind, so dass das männliche (9, 30) Anschlussstück in Verwendung innerhalb des weiblichen Anschlussstücks über einen Bereich von relativen Positionen der zwei Anschlüssstücke beibehalten werden kann; und wobei
mindestens ein Teil des Kopfes (35) angeordnet ist, um von der Halterung (31) abnehmbar zu sein, um es dem Rest der Halterung in Verwendung zu ermöglichen, durch das Durchgangsloch (6, 7, 27) zu passieren; und dass:
der Halter in zwei Hälften geformt ist, die durch Filmscharniere verbunden sind, wobei die Hälften in Verwendung zusammengefaltet sind, um ein im Wesentlichen zylindrisches Anschlussstück auszubilden, das in das zylindrische Durchgangsloch in dem Rad eingesetzt wird.

2. System nach Anspruch 1, wobei der Kopf (35) einen oder mehrere Schlitze (36) oder Formationen umfasst, die vorgesehen sind, um ein Werkzeug zu empfangen, um die Entfernung von mindestens dem Teil des Kopfes zu erleichtern.

3. System nach einem der vorstehenden Ansprüche, wobei die Halterung (31) zwei oder mehr separate Bauteile umfasst.

4. System nach einem der vorstehenden Ansprüche, wobei die männlichen (9, 30) und die weiblichen Anschlussstücke Tannenbaumanschlussstücke sind.

5. System nach einem der vorstehenden Ansprüche, wobei mehrere Kappenbauteile (5, 28) vorhanden sind.

6. System nach einem der vorstehenden Ansprüche, wobei das oder jedes Kappenbauteil (5, 28) mehrere Anschlussstücke (9, 30) umfasst und eine jeweilige Halterung (31) für jedes Anschlussstück bereitgestellt ist.

7. Radanordnung für Straßenfahrzeuge, umfassend:
ein Rad (1, 21), umfassend eine Vielzahl von Speichen (2, 23) und eine Vielzahl von Durchgangslöchern (7, 27);
und ein Radkappensystem für Straßenfahrzeuge nach einem der vorstehenden Ansprüche.

8. Radanordnung für Straßenfahrzeuge nach Anspruch 7, wobei sich jeweilige Durchgangslöcher (7, 27) an oder neben einem radial inneren und/oder einem radial äußeren Ende von jeder Speiche (2, 23) befinden.

9. Radanordnung für Straßenfahrzeuge nach Anspruch 7 oder 8, wobei das Rad (21) eine Aussparung (26) umfasst, das Durchgangsloch (27) in der Aussparung ausgebildet ist und das Kappenbauteil (28) konfiguriert ist, um in die Aussparung zu passen.

10. Radanordnung für Straßenfahrzeuge nach Anspruch 9, wobei die Aussparung (26) in einer der Speichen (23) ausgebildet ist.

11. Radanordnung für Straßenfahrzeuge nach Anspruch 7, umfassend eine Vielzahl von Kappenbauteilen (5, 28), die angeordnet sind, um Lücken in (26) oder zwischen den Speichen (2, 23) auszufüllen.

12. Radanordnung für Straßenfahrzeuge nach Anspruch 7 oder 11, umfassend einen oder mehrere Stege (6), wobei ein oder mehrere der Durchgangslöcher (7) in den Stegen ausgebildet sind.

13. Radanordnung für Straßenfahrzeuge nach einem der Ansprüche 7 bis 12, wobei das Kappenbauteil (5, 28) eine Vorderseite, die vorgesehen ist, um in Verwendung sichtbar zu sein, und eine gegenüberliegende Hinterseite aufweist, und wobei das Anschlussstück (9, 30) des Kappenbauteils in oder auf der Hinterseite des Kappenbauteils eingerichtet ist.

## Revendications

1. Système d'enjoliveur de roue de véhicule routier comprenant :
un composant d'enjoliveur (5, 28) destiné à être monté sur une roue de véhicule routier (1, 21) ;
et un dispositif de retenue (31) pour le composant d'enjoliveur ;
dans lequel le composant d'enjoliveur (5, 28) comprend un raccord mâle (9, 30) et le dispositif de retenue (31) est agencé, lors de l'utilisation, pour être au moins partiellement disposé dans un trou traversant (7, 27) dans la roue pour définir un raccord femelle destiné à s'engager avec le raccord du composant d'enjoliveur (5, 28) ;
et dans lequel le dispositif de retenue (31) comprend un corps (32) destiné, lors de l'utilisation, à être au moins partiellement disposé dans le trou traversant (7, 27) de la roue et à définir un raccord femelle ; et une tête (35) qui est dimensionnée pour l'empêcher de passer dans le trou traversant ; **caractérisé en ce que** :
le raccord mâle (9, 30) et le raccord femelle comprennent plusieurs rangées de dents espacées sur leur longueur pour s'engager avec l'autre des deux raccords de sorte que le raccord mâle (9, 30) puisse être, lors de l'utilisation, retenu à l'intérieur du raccord femelle sur une plage de positions relatives des deux raccords ; et dans lequel
au moins une partie de la tête (35) est conçue pour pouvoir être retirée du dispositif de retenue (31) pour permettre au reste du dispositif de retenue, lors de l'utilisation, de passer à travers le trou traversant (6, 7, 27) ; et **en ce que** :
le dispositif de retenue est moulé en deux moitiés reliées par des charnières dynamiques, lesquelles moitiés sont pliées ensemble lors de l'utilisation pour former un raccord généralement cylindrique qui est inséré dans ledit trou traversant cylindrique de ladite roue.

2. Système selon la revendication 1, dans lequel la tête (35) comprend une ou plusieurs fentes (36) ou formations destinées à recevoir un outil pour faciliter le retrait d'au moins une partie de la tête.

3. Système selon l'une quelconque des revendications précédentes, dans lequel le dispositif de retenue (31) comprend deux composants séparés ou plus.

4. Système selon l'une quelconque des revendications précédentes, dans lequel les raccords mâle (9, 30) et femelle sont des raccords en sapin.

5. Système selon l'une quelconque des revendications précédentes, dans lequel il y a de multiples composants d'enjoliveur (5, 28).

6. Système selon l'une quelconque des revendications précédentes, dans lequel le ou chaque composant d'enjoliveur (5, 28) comprend de multiples raccords (9, 30) et un dispositif de retenue respectif (31) est prévu pour chaque raccord.

7. Ensemble roue de véhicule routier comprenant :
une roue (1, 21) comprenant une pluralité de rayons (2, 23) et une pluralité de trous traversants (7, 27) ;
et un système d'enjoliveur de roue de véhicule routier selon l'une quelconque des revendications précédentes.

8. Ensemble roue de véhicule routier selon la revendication 7, dans lequel les trous traversants respectifs (7, 27) sont situés au niveau ou à proximité d'une extrémité radialement intérieure et/ou radialement extérieure de chaque rayon (2, 23).

9. Ensemble roue de véhicule routier selon la revendication 7 ou la revendication 8, dans lequel la roue (21) comprend un évidement (26), le trou traversant (27) est formé dans l'évidement et le composant d'enjoliveur (28) est configuré pour s'adapter dans l'évidement.

10. Ensemble roue de véhicule routier selon la revendication 9, dans lequel l'évidement (26) est formé dans l'un des rayons (23).

11. Ensemble roue de véhiculé routier selon la revendication 7, comprenant une pluralité de composants d'enjoliveur (5, 28) disposés pour remplir des espaces dans (26) ou entre les rayons (2, 23).

12. Ensemble roue de véhicule routier selon la revendication 7 ou la revendication 11, comprenant une ou plusieurs âmes (6) et un ou plusieurs des trous traversants (7) sont formés dans lesdites âmes.

13. Ensemble roue de véhicule routier selon l'une quelconque des revendications 7 à 12, dans lequel le composant d'enjoliveur (5, 28) a une face avant destinée à être visible lors de l'utilisation et une face arrière opposée, et le raccord (9, 30) du composant d'enjoliveur est disposé dans ou sur la face arrière du composant d'enjoliveur.
